# EUROPÄISCHE PATENTSCHRIFT

(11) **EP 3 129 530 B1**
(45) Veröffentlichungstag und Bekanntmachung des Hinweises auf die Patenterteilung: **16.05.2018**
(21) Anmeldenummer: 15711736.7
(22) Anmeldetag: 20.03.2015
(51) Int. Cl.: D01F 6/92, D01F 6/62, D01F 1/10

(54) **POLYMERFASER MIT VERBESSERTER DISPERGIERBARKEIT**
POLYMER FIBRE HAVING IMPROVED DISPERSIBILITY
FIBRE DE POLYMÈRE À DISPERSIBILITÉ AMÉLIORÉE

(30) Priorität: 07.04.2014 DE 102014004928; 16.10.2014 DE 102014015258
(43) Veröffentlichungstag der Anmeldung: 15.02.2017
(73) Patentinhaber: TREVIRA GMBH, 86399 Bobingen (DE)
(72) Erfinder: DAHRINGER, Jörg, 86399 Bobingen (DE); KLANERT, Michael, 86830 Schwabmünchen (DE); HESSE, Thomas, 37355 Kleinbartloff (DE)
(74) Vertreter: Mai Dörr Besier European Patent Attorneys
(86) Internationale Anmeldenummer: PCT/EP2015/055966
(87) Internationale Veröffentlichungsnummer: WO 2015/154971

(56) Entgegenhaltungen:
- EP-A1- 0 843 029
- JP-A- S6 081 313
- JP-A- 2004 168 862
- JP-A- 2008 208 161
- UA-C2- 66 395
- US-A- 5 667 750

## Beschreibung

Die Erfindung betrifft eine Polymerfaser mit verbesserter Dispergierbarkeit, sowie deren Verwendung.

Polymerfaser, d.h. Fasern auf Basis von synthetischen Polymeren werden industriell in großem Umfang produziert. Hierbei wird das zugrunde liegende synthetische Polymer über einen Schmelzspinnprozess hergestellt. Hierzu wird das thermoplastische, polymere Material aufgeschmolzen und mittels eines Extruders im flüssigen Zustand in einen Spinnbalken geleitet. Von diesem Spinnbalken wird das geschmolzene Material sogenannten Spinndüsen zugeführt. Die Spinndüse weist üblicherweise eine mit mehreren Bohrungen versehene Spinndüsenplatte auf, aus denen die einzelnen Kapillaren (Filamente) der Faser extrudiert werden. Neben den Schmelzspinnverfahren werden auch Naß- bzw. Lösungsmittel-Spinnverfahren zur Herstellung von Spinnfasern eingesetzt. Hierbei wird anstelle der Schmelze eine hochviskose Lösung eines synthetischen Polymers durch Düsen mit feinen Bohrungen extrudiert. Beide Verfahren werden vom Fachmann als sogenanntes mehrstelliges Spinnverfahren bezeichnet.

Die derart hergestellten Polymerfasern werden für textile und/oder technische Anwendungen eingesetzt. Hierbei ist es von Vorteil, wenn die Polymerfasern eine gute Dispergierbarkeit in wässrigen Systemen aufweisen, z.B. bei der Herstellung von nass gelegten Vliesen. Darüber hinaus ist für textile Anwendungen von Vorteil, wenn die Polymerfasern einen guten und weichen Griff aufweisen.

Die Modifizierung bzw. Ausrüstung von Polymerfasern für die jeweilige Endanwendung oder für die notwendigen Zwischenbehandlungsschritte, z.B. Verstreckung und/oder Kräuselung, erfolgt üblicherweise durch Aufbringung geeigneter Aviagen bzw. Schlichten, die auf die Oberfläche der fertigen oder zu behandelnden Polymerfaser aufgebracht werden.

Eine weitere Möglichkeit der chemischen Modifizierung kann am Polymer-Grundgerüst selbst erfolgen, beispielsweise durch Einbau von flammend wirkenden Verbindungen in der polymeren Haupt- und/oder Seitenkette.

Darüber hinaus können Additive, beispielsweise Antistatika oder farbige Pigmente, in das geschmolzene thermoplastische Polymer eingebracht oder während des mehrstelliges Spinnverfahrens in die Polymerfaser eingebracht werden.

Das Dispergierverhalten einer Polymerfaser wird u.a. von der Natur des synthetischen Polymeren beeinflusst. Insbesondere bei Fasern aus thermoplastischem Polymer wird daher die Dispergierbarkeit in wässrigen Systemen durch die auf die Oberfläche aufgebrachten Aviagen bzw. Schlichten beeinflusst und eingestellt.

Die mittels geeigneter Aviagen bzw. Schlichten erzeugte bzw. verbesserte Dispergierbarkeit ist für viele textile Anwendungen bereits ausreichend. Für technische Anwendung, insbesondere bei denen die Polymerfaser länger und/oder unter extremeren Bedingungen, z.B. hohem Druck, starken Scherkräften sowie erhöhter Temperatur, insbesondere in aggressiven, sauren, wässrigen Systemen, dispergiert vorliegt bzw. vorliegen muss, ist die Dispergierbarkeit die Mittels der oberflächlich aufgebrachten Aviagen bzw. Schlichten unzureichend und verbesserungswürdig.

Es besteht von daher die Aufgabe eine Polymerfaser mit verbesserter Dispergierbarkeit, insbesondere Langzeit-Dispergierbarkeit, bereitzustellen, die auch unter extremen Bedingungen, d.h. hohem Druck, starken Scherkräften sowie erhöhter Temperatur, insbesondere auch in aggressiven wässrigen Systemen, die ggf. einen pH Wert von <7 und/oder Elektrolyte, insbesondere auf saliner Basis, aufweisen, gut dispergierbar ist.

Die vorgenannte Aufgabe wird gelöst durch die erfindungsgemäße Polymerfaser gemäß Anspruch 1.

### Polymere

Bei den erfindungsgemäßen synthetischen Polymeren, welche das Dispersionsmedium bilden, handelt sich vorzugsweise um thermoplastische Polymere, insbesondere um thermoplastische Polykondensate, besonders bevorzugt um sogenannte synthetische Biopolymere, besonders bevorzugt um thermoplastische Polykondensate auf Basis sogenannter Biopolymere.

Der Begriff "thermoplastisches Polymer" bezeichnet bei der vorliegenden Erfindung einen Kunststoff, der sich in einem bestimmten Temperaturbereich, bevorzugt im Bereich von 25°C bis 350°C, (thermoplastisch) verformen lässt. Dieser Vorgang ist reversibel, das heißt er kann durch Abkühlung und Wiedererwärmung bis in den schmelzflüssigen Zustand beliebig oft wiederholt werden, solange nicht durch Überhitzung die sogenannte thermische Zersetzung des Materials einsetzt. Darin unterscheiden sich thermoplastische Polymere von den Duroplasten und Elastomeren.

Im Rahmen der vorliegenden Erfindung werden unter dem Begriff "thermoplastisches Polymer" bevorzugt folgende Polymere verstanden:
Acrylnitril-Ethylen-Propylen-(Dien)-Styrol-Copolymer, Acrylnitril-Methacrylat-Copolymer, Acrylnitril-Methylmethacrylat-Copolymer, Acrylnitril-chloriertes Polyethylen-Styrol-Copolymer, Acrylnitril-Butadien-Styrol-Copolymer, Acrylnitril-Ethylen-Propylen-Styrol-Copolymer, aromatische Polyester, Acrylnitril-Styrol-Acrylester-Copolymer, Butadien-Styrol-Copolymer, Celluloseacetat, Celluloseacetobutyrat, Celluloseacetopropionat, hydrierte Cellulose, Carboxymethylcellulose, Cellulosenitrat, Cellulosepropionat, Cellulosetriacetat, Polyvinylchlorid, Ethylen-Acrylsäure-Copolymer, Ethylen-Butylacrylat-Copolymer, Ethylen-Chlortrifluorethylen-Copolymer, Ethylen-Ethylacrylat-Copolymer, Ethylen-Methacryat-Copolymer, Ethylen-Methacrylsäure-Copolymer, Ethylen-Tetrafluorethylen-Copolymer, Ethylen-Vinylalkohol-Copolymer, Ethylen-Buten-Copolymer, Ethylcellulose, Polystyrol, Polyfluorethylenpropylen, Methylmethacrylat-Acrylnitril-Butadien-Styrol-Copolymer, Methylmethacrylat-Butadien-Styrol-Copolymer, Methylcellulose, Polyamid 11, Polyamid 12, Polyamid 46, Polyamid 6, Polyamid 6-3-T, Polyamid 6-Terephthalsäure-Copolymer, Polyamid 66, Polyamid 69, Polyamid 610, Polyamid 612, Polyamid 6I, Polyamid MXD 6, Polyamid PDA-T, Polyamid, Polyarylether, Polyaryletherketon, Polyamidimid, Polyarylamid, Polyaminobismaleinimid, Polyarylate, Polybuten-1, Polybutylacrylat, Polybenzimidazol, Polybismaleinimid, Polyoxadiazobenzimidazol, Polybutylenterephthalat, Polycarbonat, Polychlortrifluorethylen, Polyethylen, Polyestercarbonat, Polyaryletherketon, Polyetheretherketon, Polyetherimid, Polyetherketon, Polyethylenoxid, Polyarylethersulfon, Polyethylenterephthalat, Polyimid, Polyisobutylen, Polyisocyanurat, Polyimidsulfon, Polymethacrylimid, Polymethacrylat, Poly-4-methylpenten-1, Polyacetal, Polypropylen, Polyphenylenoxid, Polypropylenoxid, Polyphenylensulfid, Polyphenylensulfon, Polystyrol, Polysulfon, Polytetrafluroethylen, Polyurethan, Polyvinylacetat, Polyvinylalkohol, Polyvinylbutyral, Polyvinylchlorid, Polyvinylidenchlorid, Polyvinylidenfluorid, Polyvinylfluorid, Polyvinylmethylether, Polyvinylpyrrolidon, Styrol-Butadien-Copolymer, Styrol-Isopren-Copolymer, Styrol-Maleinsäureanhydrid-Copolymer, Styrol-Maleinsäureanhydrid-Butadien-Copolymer, Styrol-Methylmethacrylat-Copolymer, Styrol-Methylstyrol-Copolymer, Styrol-Acrylnitril-Copolymer, Vinylchlorid-Ethylen-Copolymer, Vinylchlorid-Methacrylat-Copolymer, Vinylchlorid-Maleinsäureanhydrid-Copolymer, Vinylchlorid-Maleinimid-Copolymer, Vinylchlorid-Methylmethacrylat-Copolymer, Vinylchlorid-Octylacrylat-Copolymer, Vinylchlorid-Vinylacetat-Copolymer, Vinylchlorid-Vinylidenchlorid-Copolymer und Vinylchlorid-Vinylidenchlorid-Acrylnitril-Copolymer.

Besonders gut geeignet sind hochschmelzende thermoplastische Polymere (Mp ≥ 100°C) eingesetzt, welche sich sehr gut in der Spinnfaser-Produktion eignen. Geeignete hochschmelzende thermoplastische Polymere sind u.a. beispielsweise Polyamide, wie z.B. Polyhexamethylenadipinamid, Polycaprolactam, aromatische oder teilaromatische Polyamide ("Aramide"), aliphatische Polyamide, wie z.B. Nylon, teilaromatische oder vollaromatische Polyester, Polyphenylensulfid (PPS), Polymere mit Ether- und Ketogruppen, wie z.B. Polyetherketone (PEK) und Polyetheretherketon (PEEK) oder Polyolefine, wie z.B. Polyethylen oder Polypropylen.

Innerhalb der hochschmelzenden thermoplastischen Polymere sind schmelzspinnbare Polyester besonders bevorzugt.

Schmelzspinnbare Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2 bis 4 C-Atome, wobei Ethylenglycol und/oder Propan-1,3-diol besonders geeignet sind.

Besonders bevorzugt sind Polyester die mindestens 95 mol % Polyethylenterephthalat (PET) aufweisen.

Derartige Polyester, insbesondere Polyethylenterephthalate, haben üblicherweise ein Molekulargewicht entsprechend einer intrinsischen Viskosität (IV) von 0,4 bis 1,4 (dl/g), gemessen an Lösungen in Dichloressigsäure bei 25°C.

Der Begriff *"synthetisches Biopolymer"* bezeichnet bei der vorliegenden Erfindung einen Werkstoff, der aus biogenen Rohstoffen (nachwachsenden Rohstoffen) besteht. Damit erfolgt eine Abgrenzung von den konventionellen, erdölbasierten Werkstoffen bzw. Kunststoffen, wie z. B. Polyethylen (PE), Polypropylen (PP) und Polyvinylchlorid (PVC).

Erfindungsgemäß besonders bevorzugte synthetische Biopolymere sind thermoplastische Polykondensate auf Basis sogenannter Biopolymere, diese umfassen Wiederholungseinheiten der Milchsäure, der Hydroxybuttersäure und/oder der Glycolsäure, bevorzugt der Milchsäure und/oder der Glycolsäure, insbesondere der Milchsäure. Polymilchsäuren werden dabei besonders bevorzugt.

Unter "Polymilchsäure" werden hier Polymere verstanden, die aus Milchsäureeinheiten aufgebaut sind. Solche Polymilchsäuren werden üblicherweise durch Kondensation von Milchsäuren hergestellt, werden aber auch bei der ringöffnenden Polymerisation von Lactiden unter geeigneten Bedingungen erhalten.

Erfindungsgemäß besonders geeignete Polymilchsäuren umfassen Poly(glycolid-co-L-lactid), Poly(L-lactid), Poly(L-lactid-co-ε-caprolacton), Poly(L-lactid-co-glycolid), Poly(L-lactid -co-D,L-lactid), Poly(D,L-lactid-co-glycolid) sowie Poly(dioxanon) ein. Derartige Polymere sind beispielsweise von der Firma Boehringer Ingelheim Pharma KG (Deutschland) unter den Handelsnamen Resomer® GL 903, Resomer® L 206 S, Resomer® L 207 S, Resomer® L 209 S, Resomer® L 210, Resomer® L 210 S, Resomer® LC 703 S, Resomer® LG 824 S, Resomer® LG 855 S, Resomer® LG 857 S, Resomer® LR 704 S, Resomer® LR 706 S, Resomer® LR 708, Resomer® LR 927 S, Resomer® RG 509 S und Resomer® X 206 S kommerziell erhältlich.

Für die Zwecke der vorliegenden Erfindung besonders vorteilhafte Polymilchsäuren sind insbesondere Poly-D-, Poly-L- oder Poly-D,L-milchsäuren.

In einer besonders bevorzugten Ausführungsform handelt es sich bei dem das Dispersionsmedium bildende synthetische Polymer um ein thermoplastisches Polykondensat auf Basis von Milchsäuren.

Die erfindungsgemäß eingesetzten Polymilchsäuren haben ein Zahlenmittel des Molekulargewichts (Mn), vorzugsweise bestimmt durch Gelpermeationschromatographie gegen engverteilte Polystyrol-Standards oder durch Endgruppentitration, von min. 500 g/mol, bevorzugt min. 1.000 g/mol, besonders bevorzugt min. 5.000 g/mol, zweckmäßigerweise min. 10.000 g/mol, insbesondere min. 25.000 g/mol. Andererseits ist das Zahlenmittel bevorzugte max. 1.000.000 g/mol, zweckmäßigerweise max. 500.000 g/mol, günstigerweise max. 100.000 g/mol, insbesondere max. 50.000 g/mol. Ein Zahlenmittel des Molekulargewichts im Bereich von min. 10.000 g/mol bis 500.000 g/mol hat sich im Rahmen der vorliegenden Erfindung ganz besonders bewährt.

Das Gewichtsmittel des Molekulargewichts (Mw) bevorzugter Milchsäurepolymere, insbesondere um Poly-D-, Poly-L- oder Poly-D,L-milchsäuren, vorzugsweise bestimmt durch Gelpermeationschromatographie gegen engverteilte Polystyrol-Standards, liegt vorzugsweise im Bereich von 750 g/mol bis 5.000.000 g/mol, bevorzugt im Bereich von 5.000 g/mol bis 1.000.000 g/mol, besonders bevorzugt im Bereich von 10.000 g/mol bis 500.000 g/mol, insbesondere im Bereich von 30.000 g/mol bis 500.000 g/mol, und die Polydispersität dieser Polymere ist günstigerweise im Bereich von 1,5 bis 5.

Die inhärente Viskosität besonders geeigneter, Milchsäurepolymere, insbesondere um Poly-D-, Poly-L- oder Poly-D,L-milchsäuren, gemessen in Chloroform bei 25°C, 0,1 % Polymerkonzentration, liegt im Bereich von 0,5 dl/g bis 8,0 dl/g, bevorzugt im Bereich von 0,8 dl/g bis 7,0 dl/g, insbesondere im Bereich von 1,5 dl/g bis 3,2 dl/g.

Weiterhin ist die inhärente Viskosität besonders geeigneter Milchsäurepolymere, insbesondere um Poly-D-, Poly-L- oder Poly-D, L-milchsäuren, gemessen in Hexafluor-2-propanol bei 30°C, 0,1 % Polymerkonzentration, im Bereich von 1,0 dl/g bis 2,6 dl/g, insbesondere im Bereich von 1,3 dl/g bis 2,3 dl/g.

Im Rahmen der vorliegenden Erfindung sind darüber hinaus Polymere, insbesondere thermoplastische Polymere, mit einer Glasübergangstemperatur größer 20°C, günstigerweise größer 25°C, bevorzugt größer 30°C, besonders bevorzugt größer 35°C, insbesondere größer 40°C, äußerst vorteilhaft. Im Rahmen einer ganz besonders bevorzugten Ausführungsform der vorliegenden Erfindung liegt die Glasübergangstemperatur des Polymers im Bereich von 35°C bis 55°C, insbesondere im Bereich von 40°C bis 50°C.

Weiterhin sind Polymere besonders geeignet, die eine Schmelztemperatur größer 50°C, günstigerweise von mindestens 60°C, bevorzugt von größer 150°C, besonders bevorzugt im Bereich von 160°C bis 210°C, insbesondere im Bereich von 175°C bis 195°C, aufweisen.

Dabei wird die Glastemperatur und die Schmelztemperatur des Polymers vorzugsweise mittels Dynamische Differenzkalorimetrie (Differential Scanning Calorimetry; kurz DSC) ermittelt. Ganz besonders bewährt hat sich in diesem Zusammenhang die folgende Vorgehensweise:
Durchführung der DSC-Messung unter Stickstoff auf einem Mettler-Toledo DSC 30S. Die Eichung erfolgt vorzugsweise mit Indium. Die Messungen werden vorzugsweise unter trockenem, Sauerstoff-freien Stickstoff (Strömungsgeschwindigkeit: vorzugsweise 40 ml/min) durchgeführt. Das Probengewicht wird vorzugsweise zwischen 15 mg und 20 mg gewählt. Die Proben werden zunächst von 0°C auf vorzugsweise eine Temperatur oberhalb der Schmelztemperatur des zu untersuchenden Polymers erwärmt, dann auf 0°C abgekühlt und ein zweites Mal von 0°C auf die genannte Temperatur mit einer Heizrate von 10°C/min erwärmt.

Ganz besonders bevorzugt als thermoplastische Polymere werden Polyester, insbesondere Milchsäurepolymere.

### Polymerfaser

Die erfindungsgemäße Polymerfaser kann als endliche Faser, z.B. als sogenannte Stapelfaser, oder als unendliche Faser (Filament) vorliegen. Zur besseren Dispergierbarkeit liegt die Faser vorzugsweise als Stapelfaser vor. Die Länge der vorgenannten Stapelfasern unterliegt keiner grundsätzlichen Einschränkung, beträgt aber im allgemeinen 1 bis 200 mm, vorzugsweise 2 bis 120 mm, besonders bevorzugt 2 bis 60 mm. Aufgrund der erfindungsgemäßen Kombination aus synthetischem Polymer als Dispersionsmedium und Silikon als dispersere Phase können insbesondere kurze Faser gut geschnitten werden. Hierunter werden Faserlängen von 5mm und weniger, insbesondere von 4mm und weniger, verstanden.

Der Einzeltiter der erfindungsgemäßen Polymerfaser, vorzugsweise Stapelfaser, beträgt zwischen 0,3 und 30 dtex, vorzugsweise 0,5 bis 13 dtex. Für einige Anwendungen sind Titer zwischen 0,3 und 3 dtex und Faserlängen von <10mm, insbesondere <8mm, besonders bevorzugt <6mm, insbesondere bevorzugt <4mm, besonders gut geeignet.
Die Bestimmung der Titer wurde gemäß DIN EN ISO1973 durchgeführt.

Die Polymerfaser kann auch als Bikomponentenfaser vorliegen, wobei die Faser aus einer Komponente A (Kern) und einer Komponente B (Hülle) besteht. Bei der Komponente A (Kern) handelt es sich um mindestens ein thermoplastisches Polymer; bei der Komponente B (Hülle) handelt es sich um mindestens ein thermoplastisches Polymer welches bei Raumtemperatur (25°C) des feste Dispersionsmedium für das Silikon bildet, wobei das Silikon die feste dispersere Phase bildet und in Mengen von 0,1 und 20 Gew.-% bezogen auf die Komponente B vorhanden ist. In einer weiteren Ausführungsform liegt das Silikon welches die feste dispersere Phase bildet auch zusätzlich im Kern vor.

In einer weiteren Ausführungsform kann der Schmelzpunkt des thermoplastischen Polymers in der Komponente A um mindestens 5°C, vorzugsweise mindestens 10°C, besonders bevorzugt mindestens 20°C, höher liegen ist als der Schmelzpunkt des thermoplastisches Polymers in der Komponente B. Vorzugsweise beträgt der Schmelzpunkt des thermoplastischen Polymers in der Komponente A mindestens 100°C, vorzugsweise mindestens 140°C, besonders bevorzugt mindestens 150°C.

Bei den in der Bikomponentenfaser eingesetzten thermoplastischen Polymeren handelt es sich um die bereit vorstehend genannten Polymere.

### Silikon

Die erfindungsgemäße Polymerfaser weist zwischen 0,1 und 20 Gew.-%, vorzugsweise 0,5 bis 3 Gew.-%, eines hochmolekularen unvernetzten, linearen Silikonpolymers wie weiter in Anspruch 1 definiert als disperse Phase auf. Das Silikon liegt bei Raumtemperatur (25°C) in Form von dispergierten, verfestigten Einschlüssen vor, die aufgrund der thermoplastischen Verarbeitung, z.B. durch Vermischen im Schmelzextruder, im Wesentlichen Homogen verteilt in der Polymermatrix der Polymerfaser vorliegen.

In einer bevorzugten Ausführungsform liegt das Silikon in geträgerter Form vor, insbesondere auf einem partikelförmigen Silikatträger, vorzugsweise aus Kieselsäure, insbesondere auf pyrogener Kieselsäure, wobei innerhalb der pyrogenen Kieselsäuren solche bevorzugt werden, deren spezifische Oberfläche bestimmt nach BET, min. 30m²/g, insbesondere min. 50m²/g, beträgt. Geeignete pyrogene Kieselsäuren sind beispielsweise auf Basis von Aerosil® (Evonik) oder auf Basis von HDK (Wacker Chemie AG). Der Anteil an Träger beträgt bis zu 35 Gew.-% bezogen auf die Gesamtmenge Silikon plus Träger.

Bei dem erfindungsgemäß als disperse Phase eingesetzten Silikon handelt es sich um ein Silikonpolymer. Als Silikonpolymere werden Polymere aus Siloxaneinheiten verstanden, bei denen die Siliciumatome mit organischen Resten abgesättigt sind.

DAIs lineare Polysiloxane werden vorzugsweise Verbindungen der Formel: 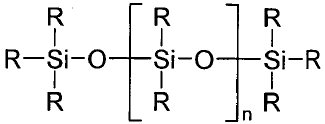 R = C1-C10 Kohlenwasserstoffrest, Alkyl, Aryl etc. verstanden.

Bei dem eingesetzten Silikonpolymer handelt es sich um ein unvernetztes, lineares hochmolekulares Silikonpolymer.

Unter dem Begriff "hochmolekulares Silicon" wird im Zusammenhang mit der vorliegenden Erfindung ein Silicon verstanden, welches ein mittleres Molekulargewicht von mindestens 100.000 g/mol, bevorzugt mindestens 150.000 g/mol, besonders bevorzugt mindestens 200.000 g/mol, aufweist und das maximale mittlere Molekulargewicht bis zu 900.000 g/mol, bevorzugt bis zu 700.000 g/mol, besonders bevorzugt bis zu 650.000 g/mol, insbesondere bis zu 600.000 g/mol, beträgt.

Hochmolekulare, unvernetzte, lineare Silikonpolymere werden eingesetzt, deren dynamische Viskosität (gemessen bei 25°C gemäß DIN 53018) mindestens 10.000Pa*s, vorzugsweise mindestens 15.000Pa*s, besonders bevorzugt mindestens 17.500Pa*s, beträgt und maximal 60.000Pa*s, vorzugsweise maximal 55.000Pa*s, besonders bevorzugt maximal 50.000Pa*s, insbesondere maximal 45.000Pa*s, beträgt.
Zur Bestimmung der dynamische Viskosität wird das ultra-hochmolekulares Silikonpolymer von gegebenenfalls vorhandenem Träger befreit. Eine geeignete Methode findet sich FAO JECFA Monographs 5 (2008).

In einer bevorzugten Ausführungsform werden hochmolekulare, unvernetzte, lineare Silikonpolymere eingesetzt deren kinematische Viskosität gemessen bei 25°C mindestens 10.000.000 cSt, vorzugsweise mindestens 15.000.000 cSt, besonders bevorzugt mindestens 17.500.000 cSt, beträgt und maximal 60.000.000 cSt, vorzugsweise maximal 55.000.000 cSt besonders bevorzugt maximal 50.000.000 cSt, insbesondere maximal 45.000.000 cSt, beträgt Beispielhafte, bevorzugte hochmolekulare Siliconöle sind die kommerziell erhältlichen Produkte SS4267 oder Baysilone-Oel M 2000000 (Momentive), KF-96H - 300000 (Shin-Etsu), PMX-200 Silicone Fluid, 500000 cSt. (Dow Corning), Genioplast (Wacker) und Rhodorsil Öl 47 V 300000 (Bluestar). Beispielhafte, bevorzugte hydroxy-terminierte Polysiloxane (PDM- Siloxane) sind die unter der CAS-Nummer 70131 -67-8 kommerziell erhältlichen Produkte Bays. Abhaesive/Release Coat. ZW PR/OH (Momentive) oder UC 107 (UChem).

In einer bevorzugten Ausführungsform werden hochmolekulare, unvernetzte, lineare Silikonpolymere eingesetzt deren Dichte gemessen bei 25°C zwischen 0,76 bis 1,07 g/cm³, besonders bevorzugt 0,9 bis 1,07 g/cm³, insbesondere 0,95 bis 1,07 g/cm³, beträgt.

Das in der erfindungsgemäßen Polymerfaser als disperse Phase eingesetzte Silikon verbessert die Dispergierbarkeit der Faser in Wasser erheblich. Einerseits dispergieren die erfindungsgemäßen Fasern sehr schnell und bleiben über einen längeren Zeitraum dispergiert. Darüber hinaus liegen die dispergierten Fasern sehr gleichmmäßig verteilt vor und eignen sich auch zur Stabilisierung von Dispersionen, bei denen neben des erfindungsgemäßen Fasern zusätzlich feste, partikelförmige Teilchen, beispielsweise mineralische Teilchen, vorliegen. Für diese Ausführungsform eignen sich erfindungsgemäße Polymerfasern mit einem Titer zwischen 0,3 und 3 dtex und einer Faserlänge von <10mm, insbesondere <8mm, besonders bevorzugt <6mm, insbesondere bevorzugt <4mm.

Das in der erfindungsgemäßen Polymerfaser als disperse Phase eingesetzte Silikon wird dem faserbildenden Polymer (Dispersionsmedium) in der Schmelze zugesetzt. Die Zugabe kann in direkter Form oder über sogenannte Masterbatches erfolgen.

Die Herstellung der erfindungsgemäßen synthetischen Polymerfaser erfolgt nach üblichen Verfahren. Zunächst wird das synthetische Polymer, sofern notwendig getrocknet und einem Extruder zugeführt. Insofern das Silikon als Masterbatch eingesetzt wird, wird dieses ebenfalls dem Extruder zugeführt, wobei die Zuführung gemeinsam oder getrennt erfolgen kann. Ansonsten kann das Silikon auch im Extruder zudosiert werden. Anschließend wird das geschmolzene Materials mittels üblicher Vorrichtungen mit entsprechenden Düsen versponnen, wobei die jeweiligen Verweilzeiten im Extruder, sowie die verwendeten Temperaturen durch das Polymer bestimmt werden, welches das Dispersionsmedium bildet. Die Austrittsgeschwindigkeit an der Düsenaustrittsfläche wird auf die Spinngeschwindigkeit so abgestimmt, dass eine Faser mit dem gewünschten Titer entsteht.

Unter Spinngeschwindigkeit ist die Geschwindigkeit zu verstehen, mit welcher die erstarrten Fäden abgezogen werden. Die derart abgezogenen Fäden können entweder direkt der Verstreckung zugeführt oder auch nur aufgewickelt bzw. abgelegt und zu einem späteren Zeitpunkt verstreckt werden. Die in üblicher Weise verstreckten Fasern und Filamente können sodann nach allgemein üblichen Verfahren fixiert und auf die gewünschte Länge zu Stapelfasern geschnitten werden. Die Faser kann dabei ungekräuselt als auch gekräuselt sein, wobei bei der gekräuselten Version die Kräuselung für das Nasslegeverfahren eingestellt werden muss (niedrige Kräuselung).

Die gebildeten Fasern können runde, ovale und weitere geeignete Querschnitte oder auch andere Formen aufweisen, wie zum Beispiel hantel-, nierenförmige, dreieckige bzw. tri- oder multilobale Querschnitte. Auch Hohlfasern sind möglich. Ebenso können Fasern aus zwei oder mehreren Polymeren zum Einsatz kommen.

Die so hergestellten Faserfilamente werden zu Garnen zusammengefasst und diese wiederum zu Spinnkabeln. Die Spinnkabel werden zur weiteren Verarbeitung zunächst in Kannen abgelegt. Die in den Kannen zwischengelagerten Spinnkabel werden aufgenommen und ein großes Spinnkabel erzeugt.
Anschließend können die großen Spinnfaserkabel, üblicherweise weisen diese 10-600 ktex auf, unter Anwendung konventioneller Methoden auf einer Bandstrasse verstreckt werden, vorzugsweise bei 10 bis 110 m/min Einlaufgeschwindigkeit. Hierbei können noch Präparationen aufgebracht werden, welche die Verstreckung begünstigen, aber die nachfolgenden Eigenschaften nicht nachteilig beeinflussen.

Die Streckverhältnisse reichen bevorzugt von 1,25 bis 4, besonders bevorzugt von 2,5 bis 3,5. Die Temperatur bei der Verstreckung liegt im Bereich der Glasumwandlungstemperatur des zu verstreckenden Spinnkabels und beträgt beispielsweise bei Polyester zwischen 40°C und 80°C.

Das Verstrecken kann einstufig oder wahlweise unter Anwendung eines zweistufigen Streckprozesses ausgeführt werden (siehe hierzu beispielsweise die US 3 816 486). Vor und während des Verstreckens kann unter Anwendung konventioneller Methoden eine oder mehrere Appreturen aufgebracht werden.

Zur gegebenenfalls durchzuführenden Kräuselung/Texturierung der verstreckten Fasern können konventionelle Methoden der mechanischen Kräuselung mit an sich bekannten Kräuselmaschinen angewendet werden. Bevorzugt ist eine mechanische Vorrichtung zur Faserkräuselung mit Dampfunterstützung, wie beispielsweise eine Stauchkammer. Es können aber auch nach anderen Verfahren gekräuselte Fasern eingesetzt werden, so z.B. auch dreidimensionalgekräuselte Fasern. Zur Durchführung der Kräuselung wird das Kabel zunächst üblicherweise auf eine Temperatur im Bereich von 50° bis 100°C, bevorzugt 70° bis 85°C, besonders bevorzugt auf etwa 78°C temperiert und mit einem Druck der Kabeleinlaufwalzen von 1,0 bis 6,0 bar, besonders bevorzugt bei etwa 2,0 bar, einem Druck in der Kräuselkammer von 0,5 bis 6,0 bar, besonders bevorzugt 1,5-3,0 bar, mit Dampf bei zwischen 1,0 und 2,0 kg/min., besonders bevorzugt 1,5 kg/min., behandelt.

Anschließend werden die glatten, oder gegebenenfalls gekräuselten, Fasern bei 120° bis 170°C im Ofen oder Heißluftstrom relaxiert und/oder fixiert.

Zur Herstellung von Stapelfasern werden die glatten, oder gegebenenfalls gekräuselten Fasern aufgenommen, gefolgt von Schneiden und gegebenenfalls Härten und Ablage in gepressten Ballen als Flocke. Die Stapelfasern der vorliegenden Erfindung werden bevorzugt auf einer der Relaxation nachgeschalteten mechanischen Schneidvorrichtung geschnitten. Zur Herstellung von Kabeltypen kann auf das Schneiden verzichtet werden. Diese Kabeltypen werden in ungeschnittener Form im Ballen abgelegt und verpresst.

Die erfindungsgemäß hergestellten Fasern besitzen in der gekräuselten Ausführungsform bevorzugt einen Kräuselungsgrad von mindestens 2, vorzugsweise mindestens 3 Kräuselungen (Kräuselbögen) pro cm, bevorzugt 3 Bögen pro cm bis 9,8 Bögen pro cm und besonders bevorzugt 3,9 Bögen pro cm bis 8,9 Bögen pro cm. Bei Anwendungen zur Herstellung textiler Flächen werden Werte für den Kräuselungsgrad von etwa 5 bis 5,5 Bögen pro cm besonders bevorzugt. Für die Herstellung textiler Flächen mittels Nasslegeverfahren muss der Kräuselgrad individuell eingestellt werden.

Die vorstehend genannten Parameter Spinngeschwindigkeit, Verstreckung, Verstreckverhältnisse, Verstrecktemperaturen, Fixierung, Fixiertemperatur, Einlaufgeschwindigkeiten, Kräuselung/Texturierung usw. richten sich nach dem jeweiligen Polymer welches das Dispersionsmedium bildet. Hierbei handelt es sich um Parameter die der Fachmann im üblichen Bereich wählt.

Aus den erfindungsgemäßen Fasern lassen sich textile Flächengebilde herstellen, die ebenfalls Gegenstand der Erfindung sind. Die aus den erfindunggemäßen Fasern hergestellten textilen Flächengebilde können auch Mischungen aus verschiedenen, aber erfindungsgemäßen, Fasern aufweisen. Gleiches gilt für die aus den erfindungsgemäßen Fasern hergestellten wässrigen Suspensionen. Aufgrund der guten Dispergierbarkeit der erfindungsgemäßen Faser werden vorzugsweise durch naß-gelegte Verfahren derartige textile Flächengebilde hergestellt.

Die erfindungsgemäße Polymerfaser zeigt neben der verbesserten Dispergierbarkeit der Faser in Wasser auch eine gute Pumpbarkeit der dispergierten Faser in Wasser, so dass die erfindungsgemäße Polymerfaser für die Herstellung von textile Flächengebilden nach dem naß-lege Verfahren besonders gut geeignet ist. Nachdem die erfindungsgemäßen Fasern die Dispergierbarkeit von festen, partikelförmigen Teilchen, beispielsweise mineralische Teilchen, begünstigen, lassen sich auch textile Flächengebilde mit einer mineralischen Ausrüstung erzeugen. Für diese Ausführungsform eignen sich erfindungsgemäße Polymerfasern mit einem Titer zwischen 0,3 und 3 dtex und einer Faserlänge von <10mm, insbesondere <8mm, besonders bevorzugt <6mm, insbesondere bevorzugt <4mm.

Neben diesen naß-lege Verfahren sind auch sogenannte Melt-Blowing Verfahren (beispielswiese wie in "Complete Textile Glossary, Celanese Acetate LLC, aus dem Jahr 2000 oder in "Chemiefaser-Lexikon, Robert Bauer, 10. Auflage, 1993, beschrieben) geeignet. Deratige Melt-Blowing Verfahren eignen sich zur Herstellung von feintitrigen Faser bzw. Vlesen, z.B. für Anwendungen im Hygienebereich.

Der Begriff "textiles Flächengebilde" ist somit im Rahmen dieser Beschreibung in seiner breitesten Bedeutung zu verstehen. Dabei kann es sich um alle Gebilde, enthaltend die erfindungsgemäßen Fasern handeln, die nach einer flächenbildenden Technik hergestellt worden sind. Beispiele für solche textilen Flächengebilde sind Vliese, insbesondere naß-gelegte Vliese, vorzugsweise auf Basis von Stapelfasern oder nach dem Melt-Blowing Verfahren hergestellte Vliese.

Die erfindungsgemäßen Faser zeichnen sich durch eine deutlich verbesserte Haptik gegenüber Faser ohne erfindungsgemäßem Zusatz, was sich durch eine verbesserte Weichheit auszeichnet. Diese Weichheit ist insbesondere für Anwendungen bei denen die erfinderungsgemäße Faser in Kontakt zur menschlichen Haut steht von großer Bedeutung. Insbesondere Fasern auf Basis von synthetischen Biopolymeren waren für derartige Anwendung unzureichend bzw. wurden aufgrund des Fehlens der geforderten Weichheit vom Verbraucher bzw. den Herstellern für Endverbraucher-Produkte abgelehnt.

Zur Beurteilung der Dispergierfähigkeit wurde folgende Testmethode entwickelt und erfindungsgemäß verwendet:
Die erfindungsgemäßen Fasern werden auf eine Länge von 2 - 12 mm geschnitten. Die geschnittenen Fasern werden bei Raumtemperatur (25°C) in ein Glasgefäß (Abmessungen: Länge 150 mm; Breite 200 mm; Höhe 200 mm), welches mit VE-Wasser (VE = vollständig entsalzt) gefüllt ist eingebracht. Die Menge an Fasern beträgt 0,25g pro Liter VE-Wasser. Zur besseren Beurteilung werden üblicherweise 1g Fasern und 4 Liter VE-Wasser verwendet.

Anschließend wir das Faser/VE-Wassergemisch mittels eines üblichen Labor-Magnetrührers (z.B. IKAMAG RCT) und einen Magnetfisches (80mm) mindestens drei Minuten gerührt (Drehzahl im Breich 750-1500 U/min) und das Rührwerk ausgeschaltet. Anschließend wird beurteilt, ob alle Fasern dispergiert sind.

Das Dispergierverhalten der Faser wird wie folgt beurteilt:
nicht dispergiert (-)
teilweise dispergiert (o)
vollständig dispergiert (+)
Die vorstehende Beurteilung erfolgt nach definierten zeitlichen Intervallen.

Als Vergleich wird eine Faser herangezogen die kein erfindungsgemäßes Silikonadditiv als disperse Phase aufweist, ansonsten aber identisch ist.

Die Erfindung wird durch das nachstehende Beispiel verdeutlicht ohne diese in ihrem Umfang darauf zu beschränken.

### Beispiel 1

1 Gramm erfindungsgemäße thermoplastische Polymerfaser (Polyester) mit einer Schnittlänge von 6mm und einem Titer 1,5 dtex (Silikonadditiv 1,5 Gew%) werden bei Raumtemperatur (25°C) wie vorstehend beschrieben dispergiert und begutachtet.

Zum Vergleich werden 1 Gramm thermoplastische Polymerfaser (Polyester) mit einer Schnittlänge von 6mm und einem Titer 1,5 dtex ohne den erfindungsgemäßen Zusatz von Silikonadditiv aber ansonsten identisch bei Raumtemperatur (25°C) wie vorstehend beschrieben dispergiert und begutachtet.

Die Ergebnisse sind in der nachfolgenden Tabelle zusammengefasst:

| Dispergierverhalten (Nach Ausschalten des Rührers) | Faser (Erfindunsgemäß) | Faser (Vergleich) |
|---|---|---|
| 0 min | + | ○ |
| 1 min | + | ○ |
| 3 min | + | ○ |
| 5 min | + | ○ |
| 10 min | + | ○ |

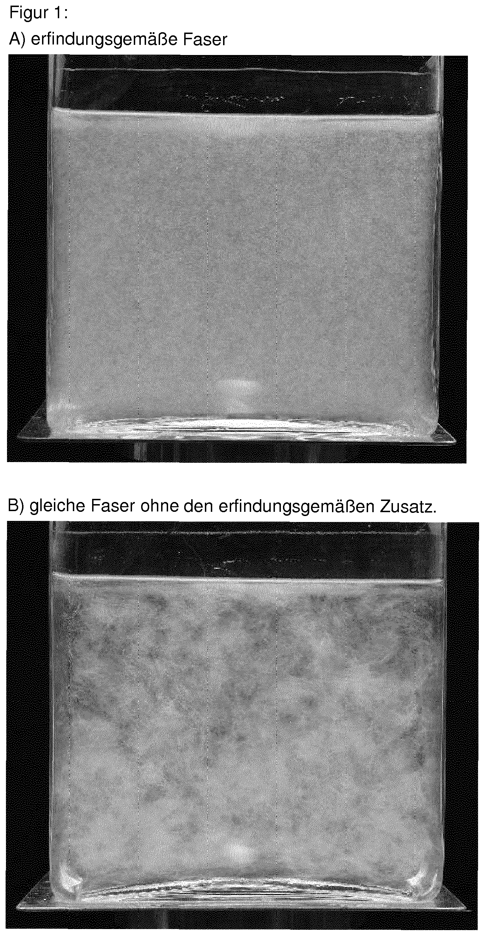

In Figur 1 ist das Dipergierverhalten unmittelbar nach Ausschalten des Rührwerkes dagestellt. Figur 1a zeigt die erfindungsgemäße Faser, Figur 1b zeigt die gleiche Faser ohne den erfindungsgemäßen Zusatz.

### Beispiel 2

1 Gramm erfindungsgemäße thermoplastische Polymerfaser auf Basis eines synthetisches Biopolymer (PLA) mit einer Schnittlänge von 4mm und einem Titer 1,5 dtex (Silikonadditiv 3 Gew%) werden bei Raumtemperatur (25°C) wie vorstehend beschrieben dispergiert und begutachtet.

Zum Vergleich werden 1 Gramm thermoplastische Polymerfaser auf Basis eines synthetisches Biopolymer (PLA) mit einer Schnittlänge von 4mm und einem Titer 1,5 dtex ohne den erfindungsgemäßen Zusatz von Silikonadditiv aber ansonsten identisch bei Raumtemperatur (25°C) wie vorstehend beschrieben dispergiert und begutachtet.

Die Ergebnisse sind in der nachfolgenden Tabelle zusammengefasst:

| Dispergierverhalten (Nach Ausschalten des Rührers) | Faser (Erfindunsgemäß) | Faser (Vergleich) |
|---|---|---|
| 0 min | + | ○ |
| 1 min | + | ○ |
| 3 min | + | ○ |
| 5 min | + | ○ |
| 10 min | + | ○ |

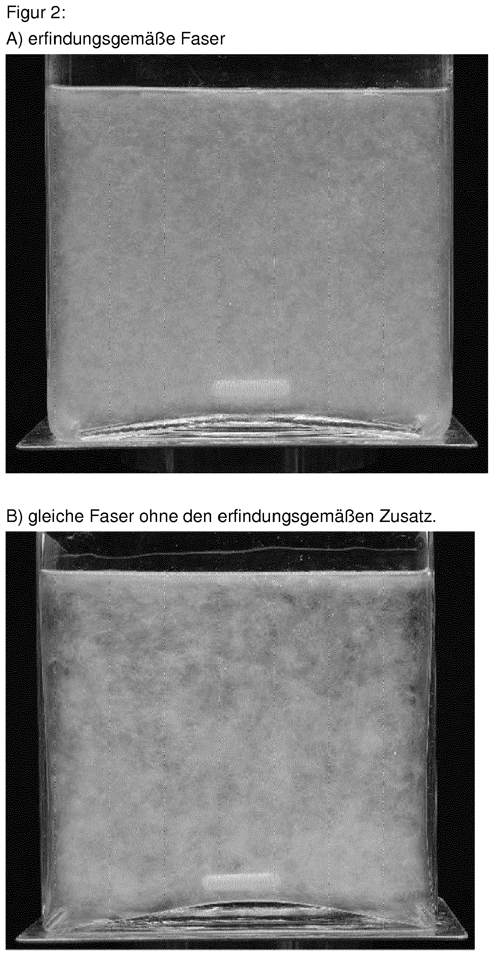

In Figur 2 ist das Dipergierverhalten unmittelbar nach Ausschalten des Rührwerkes dagestellt. Figur 2a zeigt die erfindungsgemäße Faser, Figur 2b zeigt die gleiche Faser ohne den erfindungsgemäßen Zusatz.

### Beispiel 3

1 Gramm erfindungsgemäße thermoplastische Bikomponenten-Polymerfaser (Kern/Mantel 50/50) auf Basis eines synthetisches Biopolymer (PLA) als Kern und einen Polyethylen Homopolymeren als Mantel (erfindungsgemäßer Zusatz im PE Mantel, 3 Gew% Silikonadditiv im Mantel) mit einer Schnittlänge von 4mm und einem Titer 2 dtex werden bei Raumtemperatur (25°C) wie vorstehend beschrieben dispergiert und begutachtet.

Zum Vergleich werden 1 Gramm thermoplastische Bikomponenten-Polymerfaser (Kern/Mantel 50/50) auf Basis eines synthetisches Biopolymer (PLA) als Kern und einen Polyethylen Homopolymeren als Mantel (jeweils ohne Zusatz von Silikonadditiv) mit einer Schnittlänge von 4mm und einem Titer 2 dtex werden bei Raumtemperatur (25°C) wie vorstehend beschrieben dispergiert und begutachtet.

Die Ergebnisse sind in der nachfolgenden Tabelle zusammengefasst:

| Dispergierverhalten (Nach Ausschalten des Rührers) | Faser (Erfindunsgemäß) | Faser (Vergleich) |
|---|---|---|
| 0 min | + | ○ |
| 1 min | + | ○ |
| 3 min | + | ○ |
| 5 min | + | ○ |
| 10 min | + | ○ |

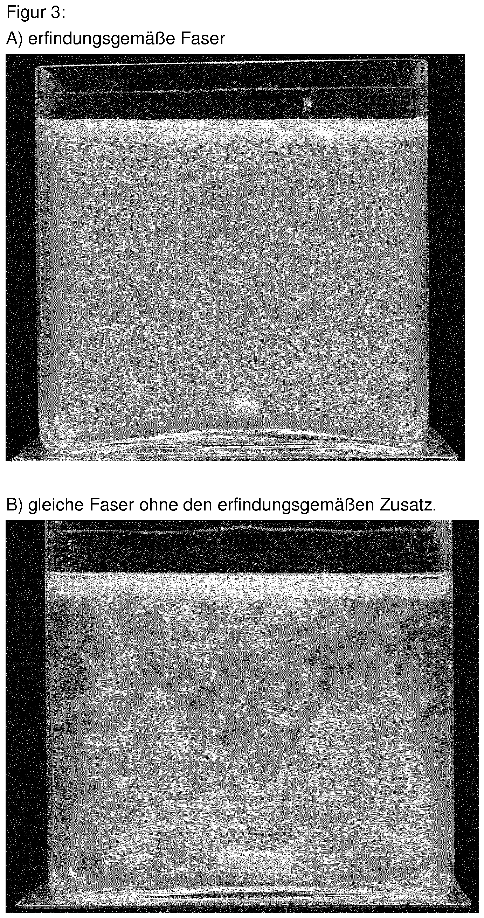

In Figur 3 ist das Dipergierverhalten unmittelbar nach Ausschalten des Rührwerkes dagestellt. Figur 3a zeigt die erfindungsgemäße Biko-Faser, Figur 3b zeigt die gleiche Biko-Faser ohne den erfindungsgemäßen Zusatz.

## Patentansprüche

1. Polymerfaser umfassend mindestens ein synthetisches Polymer, **dadurch gekennzeichnet, dass** das die Faser bildende Polymer als bei Raumtemperatur (25°C) festes Dispersionsmedium zwischen 0,1 und 20 Gew.-% eines hochmolekularen unvernetzten, linearen Silikonpolymers als bei Raumtemperatur (25°C) feste disperse Phase aufweist, dessen dynamische Viskosität gemessen bei 25°C gemäß DIN 53018 mindestens 10.000Pa*s beträgt.

2. Polymerfaser gemäß Anspruch 1, **dadurch gekennzeichnet, dass** das synthetische Polymer, welches das festes Dispersionsmedium bildet, ein thermoplastisches Polymer ist.

3. Polymerfaser gemäß Anspruch 2, **dadurch gekennzeichnet, dass** das thermoplastische Polymer, welches das festes Dispersionsmedium bildet, ein thermoplastisches Polykondensat, bevorzugt ein thermoplastisches Polykondensate auf Basis von Biopolymeren ist.

4. Polymerfaser gemäß Anspruch 3, **dadurch gekennzeichnet, dass** das thermoplastische Polykondensat auf Basis von Biopolymeren, welches das festes Dispersionsmedium bildet, ein thermoplastisches Polykondensat auf Basis von Milchsäuren ist.

5. Polymerfaser gemäß Anspruch 4, **dadurch gekennzeichnet, dass** das thermoplastische Polykondensat auf Basis von Milchsäuren eine Polymilchsäure ist, deren Zahlenmittel des Molekulargewichts (Mn) zwischen 10.000 g/mol bis 500.000 g/mol beträgt.

6. Polymerfaser gemäß Anspruch 4, **dadurch gekennzeichnet, dass** das thermoplastische Polykondensat auf Basis von Milchsäuren eine Polymilchsäure ist, deren Gewichtsmittel des Molekulargewichts (Mw) zwischen 30.000 g/mol bis 500.000 g/mol beträgt.

7. Polymerfaser gemäß einem oder mehreren der Ansprüche 1 bis 6, **dadurch gekennzeichnet, dass** das Silikonpolymer welches die disperse Phase bildet, in geträgerter Form auf einem partikelförmigen Silikatträger, vorzugsweise auf pyrogener Kieselsäure geträgert, vorliegt.

8. Polymerfaser gemäß einem oder mehreren der Ansprüche 1 bis 7, **dadurch gekennzeichnet, dass** das Silikonpolymer lineare Polysiloxane umfasst.

9. Polymerfaser gemäß Anspruch 1, **dadurch gekennzeichnet, dass** das Silikonpolymer eine dynamische Viskosität gemessen bei 25°C gemäß DIN 53018 von mindestens 15.000Pa*s, vorzugsweise mindestens 17.500Pa*s, und maximal 60.000Pa*s, vorzugsweise maximal 55.000Pa*s, besonders bevorzugt maximal 50.000Pa*s, insbesondere maximal 45.000Pa*s, aufweist.

10. Polymerfaser gemäß Anspruch 1, **dadurch gekennzeichnet, dass** das Silikonpolymer eine kinematische Viskosität gemessen bei 25°C von mindestens 10.000.000 cSt, vorzugsweise mindestens 15.000.000 cSt, besonders bevorzugt mindestens 17.500.000 cSt, beträgt und maximal 60.000.000 cSt, vorzugsweise maximal 55.000.000 cSt besonders bevorzugt maximal 50.000.000 cSt, insbesondere maximal 45.000.000 cSt, aufweist.

11. Polymerfaser gemäß einem oder mehreren der Ansprüche 1 bis 10, **dadurch gekennzeichnet, dass** die Faser einen Titer zwischen 0,3 und 30 dtex, vorzugsweise 0,5 bis 13 dtex, aufweist und vorzugsweise als Stapelfaser, insbesondere als gekräuselte Stapelfaser, vorliegt.

12. Polymerfaser gemäß einem oder mehreren der Ansprüche 1 bis 11, **dadurch gekennzeichnet, dass** die Faser in Form einer Bikomponentenfaser des Typs Kern-Hülle vorliegt, wobei das die Hülle bildende Polymer als bei Raumtemperatur (25°C) festes Dispersionsmedium zwischen 0,1 und 20 Gew.-% eines Silikonpolymers als bei Raumtemperatur (25°C) feste disperse Phase aufweist.

13. Polymerfaser gemäß einem oder mehreren der Ansprüche 1 bis 11 oder 12, **dadurch gekennzeichnet, dass** das Dispersionsmedium zwischen 0,5 und 3 Gew.-% Silikonpolymer als feste disperse Phase aufweist.

14. Textiles Flächengebilde, insbesondere erhältlich nach einem Nasslege-Verfahren, enthaltend Polymerfasern definiert in den Ansprüchen 1 bis 13.

15. Verwendung der Polymerfaser definiert in den Ansprüchen 1 bis 13 zur Herstellung von wässrigen Suspensionen.

## Claims

1. Polymer fibre comprising at least one synthetic polymer, **characterized in that** the polymer forming the fibres in the form of a solid dispersion medium at room temperature (25°C) comprises between 0.1 and 20 wt.% of a high-molecular, non-cross-linked linear silicone polymer in the form of a solid disperse phase at room temperature (25°C) whose dynamic viscosity measured at 25°C according to DIN 53018 is at least 10,000 Pa*s.

2. The polymer fibre according to claim 1, **characterized in that** the synthetic polymer which forms the solid dispersion medium is a thermoplastic polymer.

3. The polymer fibre according to claim 2, **characterized in that** the thermoplastic polymer which forms the solid dispersion medium is a thermoplastic polycondensate, preferably a thermoplastic polycondensate based on biopolymers.

4. The polymer fibre according to claim 3, **characterized in that** the thermoplastic polycondensate based on biopolymers which forms the solid dispersion medium is a thermoplastic polycondensate based on lactic acids.

5. The polymer fibre according to claim 4, **characterized in that** the thermoplastic polycondensate based on lactic acids is a polylactic acid whose number average molecular weight (Mn) is between 10,000 g/mol and 500,000 g/mol.

6. The polymer fibre according to claim 4, **characterized in that** the thermoplastic polycondensate based on lactic acids is a polylactic acid whose weight average molecular weight (Mw) is between 30,000 g/mol and 500,000 g/mol.

7. The polymer fibre according to one or more of claims 1 to 6, **characterized in that** the silicone polymer which forms the disperse phase is present in carried form on a particulate silicate carrier, preferably on pyrogenic silicic acid.

8. The polymer fibre according to one or more of claims 1 to 7, **characterized in that** the silicone polymer comprises linear polysiloxanes.

9. The polymer fibre according to claim 1, **characterized in that** the silicone polymer has a dynamic viscosity measured at 25°C in accordance with DIN 53018 of at least 15,000Pa*s, preferably at least 17,500Pa*s, and a maximum of 60,000Pa*s, preferably a maximum of 55,000Pa*s, particularly preferably a maximum of 50,000Pa*s, in particular a maximum of 45,000Pa*s.

10. The polymer fibre according to claim 1, **characterized in that** the silicone polymer has a kinematic viscosity measured at 25°C of at least 10,000,000 cSt, preferably at least 15,000,000 cSt, particularly preferably at least 17,500,000 cSt, and a maximum of 60,000,000 cSt, preferably a maximum of 55,000,000 cSt, particularly preferably a maximum of 50,000,000 cSt, in particular a maximum of 45,000,000 cSt.

11. The polymer fibre according to one or more of claims 1 to 10, **characterized in that** the fibre has a titre between 0.3 and 30 dtex, preferably 0.5 to 13 dtex, and is preferably present as staple fibre, in particular as crimped staple fibre.

12. The polymer fibre according to one or more of claims 1 to 11, **characterized in that** the fibre is present in the form of a bicomponent fibre of the core-cladding type, wherein the polymer forming the cladding in the form of a solid dispersion medium at room temperature (25°C) comprises between 0.1 and 20 wt.% of a silicone polymer in the form of a solid disperse phase at room temperature (25°C).

13. The polymer fibre according to one or more of claims 1 to 11 or 12, **characterized in that** the dispersion medium comprises between 0.5 and 3 wt.% silicone polymer as solid disperse phase.

14. Textile fabric, in particular obtainable by a wet laying method containing polymer fibres defined in claims 1 to 13.

15. Use of the polymer fibre defined in claims 1 to 13 to produce aqueous suspensions.

## Revendications

1. Fibre polymère, comprenant au moins un polymère synthétique, **caractérisée en ce que** le polymère formant les fibres comporte en tant que milieu de dispersion solide à température ambiante r (25°C) entre 0,1 et 20 % en poids d'un polymère de silicone non réticulé, à poids moléculaire élevé sous la forme d'une phase solide dispersée, dont la viscosité dynamique, mesurée à 25°C selon la norme DIN 53018 s'élève à au moins 10.000Pa*s.

2. Fibre polymère selon la revendication 1, **caractérisée en ce que** le polymère synthétique, qui forme le milieu de dispersion solide est un polymère thermoplastique.

3. Fibre polymère selon la revendication 2, **caractérisée en ce que** le polymère thermoplastique, qui forme le milieu de dispersion solide est un polycondensat, de préférence un polycondensat thermoplastique sur base de biopolymères.

4. Fibre polymère selon la revendication 3, **caractérisée en ce que** le polycondensat thermoplastique sur base de biopolymères, qui forme le milieu de dispersion solide est un polycondensat thermoplastique sur base d'acides lactiques

5. Fibre polymère selon la revendication 4, **caractérisée en ce que** le polycondensat thermoplastique sur base d'acides lactiques est un acide polylactique dont la masse moléculaire (Mn) moyenne en nombre se situe entre 10.000 g/mole et 500.000 g/mole.

6. Fibre polymère selon la revendication 4, **caractérisée en ce que** le polycondensat thermoplastique sur base d'acides lactiques est un acide polylactique dont la masse moléculaire moyenne en poids (Mw) se situe entre 30.000 g/mole et 500.000 g/mole.

7. Fibre polymère selon l'une quelconque ou plusieurs des revendications 1 à 6, **caractérisée en ce que** le polymère de silicone, qui forme la phase dispersée est présent sous une forme supportée sur un support de silicate de forme particulaire, de préférence sur de l'acide silicique pyrogéné.

8. Fibre polymère selon l'une quelconque ou plusieurs des revendications 1 à 7, **caractérisée en ce que** le polymère de silicone comprend des polysiloxanes linéaires.

9. Fibre polymère selon la revendication 1, **caractérisée en ce que** le polymère de silicone fait preuve d'une viscosité dynamique, mesurée à 25°C selon la norme DIN 53018 d'au moins 15.000Pa*s, de préférence d'au moins 17.500Pa*s, et d'un maximum de 60.000Pa*s, de préférence d'un maximum de 55.000Pa*s, de manière particulièrement préférentielle, d'un maximum de 50.000Pa*s, notamment d'un maximum de 45.000Pa*s.

10. Fibre polymère selon la revendication 1, **caractérisée en ce que** le polymère de silicone fait preuve d'une viscosité cinématique, mesurée à 25°C d'au moins 10.000.000 cSt, de préférence d'au moins 15.000.000 cSt, de manière particulièrement préférentielle, d'au moins 17.500.000 cSt et d'un maximum de 60.000.000 cSt, de préférence d'un maximum de 55.000.000 cSt, de manière particulièrement préférentielle, d'un maximum de 50.000.000 cSt, notamment d'un maximum de 45.000.000 cSt.

11. Fibre polymère selon l'une quelconque ou plusieurs des revendications 1 à 10, **caractérisée en ce que** la fibre fait preuve d'un titrage compris entre 0,3 et 30 dtex, de préférence de 0,5 à 13 dtex et se présente de préférence sous la forme d'une fibre discontinue, notamment d'une fibre discontinue frisée.

12. Fibre polymère selon l'une quelconque ou plusieurs des revendications 1 à 11, **caractérisée en ce que** la fibre se présente sous la forme d'une fibre à bicomposants du type noyau/enveloppe, le polymère formant l'enveloppe comportant en tant que milieu de dispersion solide à température ambiante (25°C) entre 0,1 et 20 % en poids d'un polymère de silicone sous la forme d'une phase dispersée solide à température ambiante (25°C).

13. Fibre polymère selon l'une quelconque ou plusieurs des revendications 1 à 11 ou 12, **caractérisée en ce que** le milieu de dispersion comporte entre 0,5 et 3 % en poids d'un polymère de silicone sous la forme d'une phase dispersée solide.

14. Structure textile plane, susceptible d'être obtenue notamment selon un procédé de couchage à l'état humide, contenant des fibres polymères définies dans les revendications 1 à 13.

15. Utilisation des fibres polymères définies dans les revendications 1 à 13 pour la production de suspensions aqueuses.
